# EUROPÄISCHE PATENTSCHRIFT

(11) **EP 3 494 831 B1**
(45) Veröffentlichungstag und Bekanntmachung des Hinweises auf die Patenterteilung: **04.08.2021**
(21) Anmeldenummer: 18206671.2
(22) Anmeldetag: 16.11.2018
(51) Int. Cl.: A45C 11/00, H04B 1/3888, G10K 11/08, H04M 1/03, H04M 1/04, H04M 1/18

(54) **LAUTSPRECHERHÜLLE FÜR EIN MOBILES GERÄT SOWIE LAUTSPRECHERSYSTEM MIT EINER SOLCHEN LAUTSPRECHERHÜLLE**
LOUDSPEAKER COVER FOR A MOBILE DEVICE AND SPEAKER SYSTEM COMPRISING A SUCH LOUDSPEAKER COVER
ENVELOPPE DE HAUT-PARLEUR POUR UN APPAREIL MOBILE AINSI QUE SYSTÈME DE HAUT-PARLEUR DOTÉ D'UNE TELLE ENVELOPPE DE HAUT-PARLEUR

(30) Priorität: 07.12.2017 DE 202017107455 U
(43) Veröffentlichungstag der Anmeldung: 12.06.2019
(73) Patentinhaber: Englert, Klaus, 63755 Alzenau (DE)
(72) Erfinder: Englert, Klaus, 63755 Alzenau (DE)
(74) Vertreter: Keil & Schaafhausen Patentanwälte PartGmbB

(56) Entgegenhaltungen:
- EP-A1- 2 383 965
- WO-A1-2016/173855
- US-A1- 2016 035 336
- US-B1- 9 049 911

## Beschreibung

Die Erfindung betrifft eine passive Klangverstärkung für mobile Geräte mit einem Lautsprechersystem in Verbindung mit Lautsprecherhüllen. Insbesondere betrifft die Erfindung Lautsprecherhüllen für mobile Geräte mit einem Lautsprecher, wie beispielsweise einem Mobiltelefon, aufweisend eine Schutzschale in die das mobile Gerät einsetzbar ist, wobei die Schutzschale eine Rückwand und mindestens eine Seitenwand mit einer Lautsprecheröffnung aufweist und ein plattenförmiges Bauteil, welches um eine erste Schwenkachse schwenkbar an der Schutzschale befestigt ist.

Viele elektronische Unterhaltungsgeräte wie Mobiltelefone, MP3-Player und Tablet Computer werden immer kompakter und leichter und können daher ständig von einem Benutzer mitgeführt werden. Solche Geräte weisen oftmals einen Lautsprecher auf, da der Benutzer mit solchen Geräten beispielsweise Musik hören, Filme anschauen und Spiele spielen möchte. Aufgrund ihrer kompakten Bauform werden aber lediglich sehr kleine Lautsprecher in solchen Geräten verbaut, wodurch die Klangqualität, insbesondere im Tieftonbereich, leidet.

Besonders Tablet Computer und Smartphones ersetzen in zunehmendem Maße klassische Desktop PCs und vor allem Laptops und Notebooks. Sie haben aber konstruktionsbedingt einige Nachteile. Erstens liegt der empfindliche Bildschirm frei an einer Außenfläche und kann daher schnell zerkratzen oder gar zerstört werden. Auch die weiteren Außenflächen sind aufgrund der Designerfordernisse meist unzureichend gegen Beschädigungen geschützt. Zweitens kann der Winkel des Bildschirms nicht wie bei einem Laptop so geneigt werden, dass er in Richtung des Benutzers zeigt, da Bildschirm und Gehäuse ein einziges starres Teil bilden. Stattdessen liegt das Gerät entweder flach auf einer Unterlage auf, oder es muss beim Bedienen in der Hand gehalten werden. Des Weiteren werden aufgrund der kompakten Bauform lediglich sehr kleine Lautsprecher verbaut. Aufgrund dieser baulichen Einschränkungen existiert eine Vielzahl von Accessoires um diese Nachteile zu beheben oder zumindest zu mindern.

Schutz- und Stützvorrichtungen für Tablet Computer und Mobiltelefone sind in einer Vielzahl verschiedener Ausführungen bekannt. Eine Kombination aus schützender Tasche und Aufsteller kennt man beispielsweise aus EP 2 383 965 A1. Eine weitere Computerstützvorrichtung mit der Funktion einer Tragetasche offenbart DE 20 2011 051 426 U1. Ein stabiles Gehäuse mit einer Vorrichtung zum Aufstellen des darin befindlichen Geräts ist aus DE 20 2012 100 042 U1 bekannt.

Auch Vorrichtungen zur Verbesserung der Klangeigenschaften eines mobilen Geräts sind hinreichend bekannt. Diese lenken die, beispielsweise an der Rückseite eines Tablet Computers erzeugten, Schallwellen nach vorne zum Benutzer, wie bei der Klangführungshülle in US 2013/0004012 A1 oder der Multifunktionshülle in WO 2014/147410 A1.

Andere Varianten erweitern die integrierten Lautsprecher eines mobilen Geräts um ein Klang- und Resonanzvolumen um die Klangeigenschaften zu verbessern, wie es etwa vom "Sounder Stand" bekannt ist (https://www.kickstarter.com/projects/1034665231/the-sounder-natural-amplifier-for-the-ipad). Ein größeres Klangvolumen als der "Sounder Stand" bietet die "iBox", ein als Holzschachtel konstruierter Tablet Computer Halter (http://www.slashgear.com/ibox-is-25-worth-of-wood-to-hold-y-our-ipad-2891869/). Die Varianten mit Klangvolumen liefern zwar die größte Verbesserung der Klangeigenschaften, haben aber den entscheidenden Nachteil, dass sie sperrige und schwere Konstruktionen aufweisen. Sie sind daher nicht dazu geeignet immer mit dem Mobiltelefon oder Tablet Computer, welche sich gerade durch die kompakte Bauform und das geringe Gewicht auszeichnen, mitgeführt zu werden.

In der WO 2016/173855 A1 ist zudem ein transportables Lautsprechersystem mit großem Klang- und Resonanzvolumen auf Basis einer Soundblende mit Reflexions- und Resonanzeffekt offenbart, wobei das Klangvolumen für einen Tablet Computer durch eine klappbare Konstruktion plattenförmiger Bauteile in aufgestellter Konfiguration sowie die Oberfläche einer Unterlage und eine zusätzliche Soundblende gebildet wird. Durch die Ausgestaltung des Klangvolumens ist diese Art der Anwendung insbesondere für Geräte vorgesehen, deren Lautsprecher nicht flächig an einer der Seitenkanten angeordnet sind.

Die Aufgabe besteht daher darin, ein Lautsprechersystem zu schaffen, das einen ausreichenden Schutz vor Beschädigungen bietet und zusätzlich die Klangqualität merklich erhöht, vor allem auch im Tieftonbereich, und dennoch eine kompakte und leichte Bauform aufweist. Die Aufgabe besteht weiter darin eine Lautsprecherhülle für ein solches Lautsprechersystem zu schaffen.

Die obige Aufgabe wird gelöst durch eine Lautsprecherhülle der eingangs genannten Art, die wenigstens ein zweites plattenförmiges Bauteil aufweist, welches um eine zweite Schwenkachse schwenkbar an dem ersten plattenförmigen Bauteil befestigt ist, wobei die Schwenkachsen zueinander rechtwinklig sind und wobei die Schutzschale einen Schallkanal von der Lautsprecheröffnung zur Rückwand der Schutzschale aufweist. Der Schallkanal verläuft dabei bis zur Rückseite der Rückwand, also der dem mobilen Gerät abgewandten Seite der Rückwand. Der Schallkanal stellt somit eine Verbindung von der Lautsprecheröffnung zur Rückseite der Schutzschale dar.

Die Lautsprecheröffnung kann dabei auch derart dimensioniert und angeordnet sein, dass sich mehrere Lautsprecher des mobilen Geräts in dem Bereich einer Lautsprecheröffnung befinden. Weiter kann sich auch ein oder mehrere Anschlüsse, wie ein Ladeanschluss oder ein Audioanschluss im Bereich der Lautsprecheröffnung befinden.

Ein Lautsprechersystem liefert eine erhöhte Klangqualität, wenn es neben dem eigentlichen Lautsprecher ein Klang- und Resonanzvolumen besitzt. Um einen das Resonanzvolumen bildenden Resonanzkörper zu schaffen, werden mindestens drei Seitenwände benötigt. Durch die drei Seitenwände, welche erfindungsgemäß als plattenförmige Bauteile und die Schutzschale ausgeführt sind, und die Oberfläche einer Unterlage, auf die die Bauteile gestellt werden, wird bspw. ein Prisma mit einer dreieckigen Grundfläche und einer einseitig geöffneten Stirnfläche gebildet. Der von einem Lautsprecher erzeugte Schall wird dann durch den Schallkanal zur Rückwand der Schutzschale und damit in das Klang- und Resonanzvolumen geleitet. Ein besonderer Vorteil der erfindungsgemäßen Lautsprecherhülle liegt darin, dass das erste und zweite plattenförmige Bauteil aufgrund ihrer Schwenkbarkeit und der Anordnung der Schwenkachsen als eine Stütze für die Schutzschale und damit das darin eingesetzte mobile Gerät dienen können. Es ist somit möglich, das mobile Gerät, bspw. ein Mobiltelefon oder ein Tablet Computer, mittels der beiden plattenförmigen Bauteile in einer gewünschten Position zu halten.

Um eine solche Lautsprecherhülle auch transportabel zu gestalten, können die Teile des Resonanzkörpers Scharniere oder andere schwenkbare Verbindungen aufweisen. Damit können die Teile derart zusammengefaltet werden, dass ein flach liegender Zustand entsteht, bei dem die plattenförmigen Bauteile sowie die Rückwand der Schutzschale im Wesentlichen parallel zueinander und übereinander angeordnet sind. In einem solchen Zustand lässt sich die Lautsprecherhülle mit dem mobilen Gerät einfach und platzsparend verstauen.

In einem aufgerichteten Zustand, in dem die plattenförmigen Bauteile und die Schutzschale das Resonanzvolumen bilden, stehen die plattenförmigen Bauteile sowie die Rückwand der Schutzschale in einem spitzen, rechten oder stumpfen Winkel zueinander.

In diesem aufgerichteten Zustand dienen das erste und das zweite plattenförmige Bauteil als Stützvorrichtung für die Schutzschale und das darin einsetzbare mobile Gerät, um das mobile Gerät in einem definierten Winkel aufzustellen. Dies ist von besonderem Vorteil, wenn das mobile Gerät neben dem Lautsprecher auch eine Anzeige zur Darstellung von Inhalten aufweist. Möchte ein Benutzer diese Anzeige betrachten, sollte diese zum Benutzer hin ausgerichtet sein. Der Aufstellwinkel, also der Winkel den das mobile Gerät zu einer Unterlage bildet, kann dabei je nach Zweck flacher oder steiler gewählt werden.

Um durch die plattenförmigen Bauteile und eine Unterlage in einem aufgerichteten Zustand ein Resonanzvolumen bilden zu können, müssen die plattenförmigen Bauteile und die Schutzschale, insbesondere die Rückwand der Schutzschale, mit jeweils einer ihrer Seitenkanten in einer Ebene liegen. Wird das System auf eine Unterlage gestellt, so muss die Oberfläche dieser Unterlage in dieser Ebene liegen, sodass die Bauteile bündig mit dieser Unterlage abschließen.

Die plattenförmigen Bauteile und die Schutzschale definieren dann zusammen mit der Ebene ein Volumen, welches an der, dem zweiten Bauteil gegenüberliegenden Seite geöffnet ist, wobei der Schallkanal in das Innere des Volumens gerichtet ist.

In einer bevorzugten Ausführungsform weist die Rückwand der Schutzschale eine Abdeckung auf, wobei die Abdeckung an der Position des Schallkanals eine Aussparung aufweist. Die Abdeckung kann dabei einstückig mit dem ersten plattenförmigen Bauteil verbunden sein, sodass diese in der Art eines Booklet-Case einen Schutz für das mobile Gerät bilden. Durch die Aussparung wird auch in dieser Ausführungsform sichergestellt, dass der Schallkanal eine durchgehende Verbindung in das Klang- und Resonanzvolumen schafft.

In einer Ausführungsform der Erfindung kann das erste plattenförmige Bauteil mehrere Segmente aufweisen, die gelenkig miteinander verbunden sind. Je nach Größe und Anordnung der einzelnen Segmente können damit verschiedene Aufstellgeometrien realisiert werden.

In einer bevorzugten Ausführungsform können die Formen der plattenförmigen Bauteile und die Anordnung der Schwenkachsen so gewählt sein, dass im aufgerichteten Zustand die Schutzschale, insbesondere die Rückwand, sowie die Segmente des ersten plattenförmigen Bauteils und das zweite plattenförmige Bauteil ein Volumen definieren, welches an der, dem zweiten Bauteil gegenüberliegenden Seite geöffnet ist, wobei der Schallkanal in das Innere des Volumens gerichtet ist. Insbesondere kann durch die Segmente und die Rückwand der Schutzschale die Seitenflächen eines dreiseitigen Prismas gebildet werden, wobei eine Grundfläche des Prismas durch das zweite plattenförmige Bauteil verschlossen wird und die gegenüberliegende Stirnfläche geöffnet ist.

In einer bevorzugten Ausführungsform der Erfindung kann das zweite plattenförmige Bauteil im aufgerichteten Zustand an der Seitenwand der Schutzschale anliegen. Hierdurch wird das Volumen in diese Richtung abgeschlossen, sodass die dem zweiten plattenförmigen Bauteil gegenüberliegende Öffnung die einzige Öffnung des Volumens darstellt. Dies führt zu besonders guten Klang- und Resonanzeigenschaften.

In einer besonders bevorzugten Ausführungsform der Erfindung kann das zweite plattenförmige Bauteil im aufgerichteten Zustand die Lautsprecheröffnung der Schutzschale abdecken. Die Schallwellen werden daher in einem geschlossenen Kanal von den Lautsprechern des mobile Geräts bis in das Klang- und Resonanzvolumen geleitet. Im flachen Zustand ist die Lautsprecheröffnung nicht abgedeckt und somit nach außen offen, sodass die Lautsprecher in diesem Fall ihre normale Abstrahlcharakteristik aufweisen. Wird das mobile Gerät unbenutzt abgelegt, wird dieses typischerweise auf die Rückseite oder die Vorderseite gelegt. Da die Lautsprecheröffnungen in der Seitenwand nicht abgedeckt sind, können die Schallwellen ungehindert abgegeben werden. So wird beispielsweise das Klingeln eines Mobiltelefons nicht gedämpft. Eine Umlenkung der Schallwellen in Richtung der Rückseite der Schutzschale besteht daher nur im aufgerichteten Zustand, während im flachen Zustand keine Umlenkung der Schallwellen stattfindet.

In einer bevorzugten Ausführungsform der Erfindung kann der Schallkanal als durchgehende Aussparung der Schutzschale gebildet sein. Das bedeutet, dass der Schallkanal eine Verbindung von der Innenseite der Schutzschale zur Außenseite der Schutzschale bildet. In einem aufgerichteten Zustand kann dann das zweite plattenförmige Bauteil auch den Schallkanal abdecken. Mit eingesetztem mobilen Gerät verläuft der Schallkanal somit in der Seitenwand und wird nach unten durch das mobile Gerät und nach oben durch das zweite plattenförmige Bauteil abgegrenzt.

In einer alternativen Ausführungsform der Erfindung kann der Schallkanal als einseitige Aussparung der Schutzschale gebildet sein. Das heißt die Schutzschale ist zur Bildung des Kanals nicht vollständig durchbrochen, sondern besitzt lediglich eine Vertiefung. Diese Vertiefung kann sich auf der Außenseite der Schutzschale befinden. Die Außenseite ist die dem mobilen Gerät abgewandte Seite der Schutzschale. Damit kann verhindert werden, dass die von dem Lautsprecher erzeugten Schallwellen teilweise durch eine kleine Lücke zwischen Schutzschale und mobilem Gerät dringen, insbesondere wenn die Verbindung zwischen Seitenwand und mobilem Gerät nicht schlüssig ist, und somit die Klangeigenschaften verändern. Der Schallkanal verläuft daher als Vertiefung in der Seitenwand und wird nach außen in aufgerichtetem Zustand durch das zweite plattenförmige Bauteil abgedeckt. Alternativ kann der Schallkanal als Vertiefung auf der Innenseite der Schutzschale ausgeführt sein. Dies ist in Bereichen von Vorteil, die nicht von dem zweiten plattenförmigen Bauteil abgedeckt werden können. Der Schallkanal verläuft daher als Vertiefung in der Seitenwand und wird nach innen durch das mobile Gerät abgedeckt.

In einer weiteren alternativen Ausführungsform der Erfindung kann der Schallkanal vollständig innerhalb der Schutzschale verlaufen. Der Schallkanal bildet daher unabhängig von dem zweiten plattenförmigen Bauteil einen geschlossenen Kanal und ist an allen Seiten durch Bereiche der Schutzschale abgeschlossen. Der Schallkanal kann beispielsweise als Bohrung in der Schutzschale ausgeführt sein.

Der Schallkanal kann auch eine beliebige Kombination dieser Ausführungsformen aufweisen und in verschiedenen Bereichen dementsprechend unterschiedlich ausgeführt sein.

In einer bevorzugten Ausführungsform verläuft der Schallkanal in der Seitenwand und/oder der Rückwand der Schutzschale. Wird der Schallkanal in der Rückwand der Schutzschale fortgesetzt, so lässt sich die Schallabgabe an das Klang- und Resonanzvolumen und somit das Klangverhalten anpassen. Insbesondere in Kombination mit einem innerhalb der Schutzschale verlaufenden Schallkanal oder einem als einseitige Aussparung ausgeführten Schallkanal der nur nach innen geöffnet ist, lässt sich somit der Austrittspunkt des Schallkanals in das Klang- und Resonanzvolumen beliebig wählen um die Klangeigenschaften zu steuern.

In einer bevorzugten Ausführungsform der Erfindung kann sich der Schallkanal über die volle Breite der Lautsprecheröffnung erstrecken. Eine solche Ausführungsform ist besonders einfach zu fertigen, da Lautsprecheröffnung und Schallkanal als gemeinsame Aussparung ausgeführt sind.

In einer bevorzugten Ausführungsform der Erfindung kann sich der Schallkanal ausgehend von der Lautsprecheröffnung erweitern. Damit werden die Schallwellen mit besonders geringen Verlusten zur Rückwand der Schutzschale und damit in das Klang- und Resonanzvolumen geleitet.

In einer bevorzugten Ausführungsform ist an dem ersten plattenförmigen Bauteil ein drittes plattenförmiges Bauteil, insbesondere an der dem zweiten plattenförmigen Bauteil gegenüberliegenden Seite des ersten plattenförmigen Bauteils, angelenkt. Diese Ausführungsform ist besonders geeignet für mobile Geräte bei denen an zwei gegenüberliegenden Seitenkanten Lautsprecher angeordnet sind. Insbesondere können dann auch auf der Seite des dritten plattenförmigen Bauteils Lautsprecheröffnungen mit einem Schallkanal angeordnet sein. Durch Öffnen und Schließen der einzelnen plattenförmigen Bauteile kann so das Klangverhalten angepasst werden. Durch Schließen beider Seiten kann die Lautstärke stark gedämpft werden, um beispielsweise kurzfristig ein Gespräch zu führen ohne die Lautstärke am mobilen Gerät regulieren zu müssen.

Die Aufgabe wird außerdem gelöst durch ein Lautsprechersystem mit einem mobilen Gerät, welches einen Lautsprecher aufweist, sowie einer Lautsprecherhülle gemäß einer der obigen Ausführungsformen, wobei das mobile Gerät in die Schutzschale der Lautsprecherhülle eingesetzt ist und die Lautsprecheröffnung der Schutzschale an der Position des Lautsprechers des mobilen Geräts angeordnet ist.

In einer bevorzugten Ausführungsform liegt das erste plattenförmige Bauteil oder ein Segment des ersten plattenförmigen Bauteils im flachen Zustand auf einer Anzeigeeinrichtung des mobilen Geräts auf. Dadurch wird die Anzeigevorrichtung vor Beschädigungen geschützt.

Neben dem mobilen Gerät können auch weitere Bauteile einen oder mehrere Lautsprecher aufweisen. Jeder Lautsprecher, der mit seiner Öffnung direkt oder über einen Schallkanal in das durch die Bauteile gebildete Volumen gerichtet ist, trägt zum gesamten Klangbild des Lautsprechersystems bei.

Das zweite plattenförmige Bauteil kann beispielsweise eine dreieckige Grundform aufweisen. Eine Seitenkante des Bauteils, die Unterkante, liegt dann in der Ebene und bildet somit die Verbindung zu einer Unterlage. Die Vorderkante des Bauteils grenzt an die Schutzschale, und die Hinterkante grenzt an das erste plattenförmige Bauteil. Der Winkel zwischen Unterkante und Vorderkante ist damit identisch mit dem Aufstellwinkel der Schutzschale, und der Winkel zwischen der Unterkante und der Hinterkante entspricht dem Neigungswinkel des ersten Bauteils. Um eine besonders hohe Stabilität im aufgerichteten Zustand zu erreichen, kann der Neigungswinkel des ersten plattenförmigen Bauteils, also der Winkel des zweiten plattenförmigen Bauteils zwischen der Unterkante und der Hinterkante, kleiner als 90° sein.

Um eine besonders gute Resonanzwirkung zu erreichen, ist es wichtig, dass das Klangvolumen im Wesentlichen nur eine Öffnung besitzt. Es ist daher darauf zu achten, dass die einzelnen Bauteile möglichst schlüssig aneinander anliegen. Um dies zu erreichen, kann die erfindungsgemäß schwenkbare Verbindung zwischen dem ersten Bauteil und dem zweiten Bauteil als federunterstütztes Scharnier ausgebildet sein. Dadurch wird das zweite Bauteil von einer Feder in Kontakt mit der Schutzschale gehalten.

Alternativ oder zusätzlich kann die Verbindung zwischen der Schutzschale und dem zweiten Bauteil auch magnetisch gesichert sein. Hat die Schutzschale ferromagnetische Eigenschaften, so zieht der Magnet das zweite Bauteil bündig an die Seitenwand der Schutzschale und führt so zu einer vollständig geschlossenen Verbindung.

Die Verbindung zwischen erstem plattenförmigem Bauteil und zweitem plattenförmigem Bauteil kann erfindungsgemäß auch durch eine Klemmschiene mit Scharnier erfolgen. Das Scharnier sorgt dabei für die Faltbarkeit der Verbindung und die Klemmschiene erlaubt es, die Verbindung reversibel anzustecken und abzuziehen. Scharnier und Klemmschiene können dabei auch als eine Einheit ausgebildet sein.

Soll die Verbindung dauerhaft sein, können zweites und erstes plattenförmiges Bauteil auch einstückig ausgebildet sein. Die Schwenkbarkeit an der Verbindungsstelle wird dabei beispielsweise durch eine reduzierte Dicke in der Art eines Filmscharniers und/oder ein biegsames Material erreicht.

Weiter kann vorgesehen sein, dass das zweite und das erste plattenförmige Bauteil in einem flach liegenden Zustand nicht einfach aufeinander aufliegen, sondern dass das erste Bauteil eine für das zweite Bauteil passende Aussparung besitzt. Der Bereich des ersten Bauteils hat dabei eine reduzierte Dicke, z.B. genau um den Betrag der Dicke des zweiten Bauteils. Dadurch wird die Aussparung vom zweiten Bauteil ausgefüllt. Die Aussparung kann dabei auch etwas größer als das zweite Bauteil sein, um ein problemloses Ein- und Ausklappen zu ermöglichen. Möchte ein Benutzer die Teile von einem eingeklappten Zustand in einen ausgeklappten Zustand überführen, so muss er das zweite Bauteil greifen können. Dazu kann auch vorgesehen sein, die Aussparung im ersten Bauteil, beispielsweise an der Position der Spitze des zweiten Bauteils, derart zu vergrößern, dass das zweite Bauteil mit zwei Fingern gefasst werden kann.

Die Erfindung wird nachfolgend anhand von Ausführungsbeispielen und unter Bezugnahme auf die Figuren erläutert.

Es zeigen:
- Fig.1: eine Draufsicht einer Schutzhülle für ein Mobiltelefon;
- Fig. 2: eine Draufsicht einer Schutzhülle mit eingesetztem Mobiltelefon;
- Fig. 3: eine perspektivische Ansicht einer aufgestellten Schutzhülle gemäß Stand der Technik;
- Fig. 4: eine Draufsicht eines erfindungsgemäßen Systems;
- Fig. 5: eine perspektivische Ansicht eines aufgestellten erfindungsgemäßen Lautsprechersystems;
- Fig. 6: eine perspektivische Ansicht eines aufgestellten erfindungsgemäßen Lautsprechersystems mit geöffneter Soundblende;
- Fig. 7: eine perspektivische Ansicht eines aufgestellten erfindungsgemäßen Lautsprechersystems ohne Schutzschale;
- Fig. 8: eine gedrehte Ansicht eines aufgestellten erfindungsgemäßen Lautsprechersystems;
- Fig. 9: eine perspektivische Ansicht einer Schutzschale einer Ausführungsform für zwei Lautsprecher;
- Fig. 10: eine perspektivische Ansicht einer weiteren Ausführungsform des erfindungsgemäßen Systems ohne Soundblende;
- Fig. 11a: Seitenansicht einer Ausführungsform des erfindungsgemäßen Systems;
- Fig. 11b: Seitenansicht der Ausführungsform der Fig. 11a mit Soundblende;
- Fig. 12a: Seitenansicht einer Ausführungsform des erfindungsgemäßen Systems;
- Fig. 12b: Seitenansicht der Ausführungsform der Fig. 12a mit Soundblende;
- Fig. 13a: Seitenansicht einer Ausführungsform des erfindungsgemäßen Systems;
- Fig. 13b: Seitenansicht der Ausführungsform der Fig. 13a mit Soundblende;
- Fig. 14: eine perspektivische Ansicht einer Lautsprecheröffnung mit Schallkanal;
- Fig. 15: eine weitere perspektivische Ansicht einer Lautsprecheröffnung mit Schallkanal;
- Fig. 16: eine perspektivische Ansicht einer weiteren Ausführungsform des erfindungsgemäßen Systems mit zwei Soundblenden;

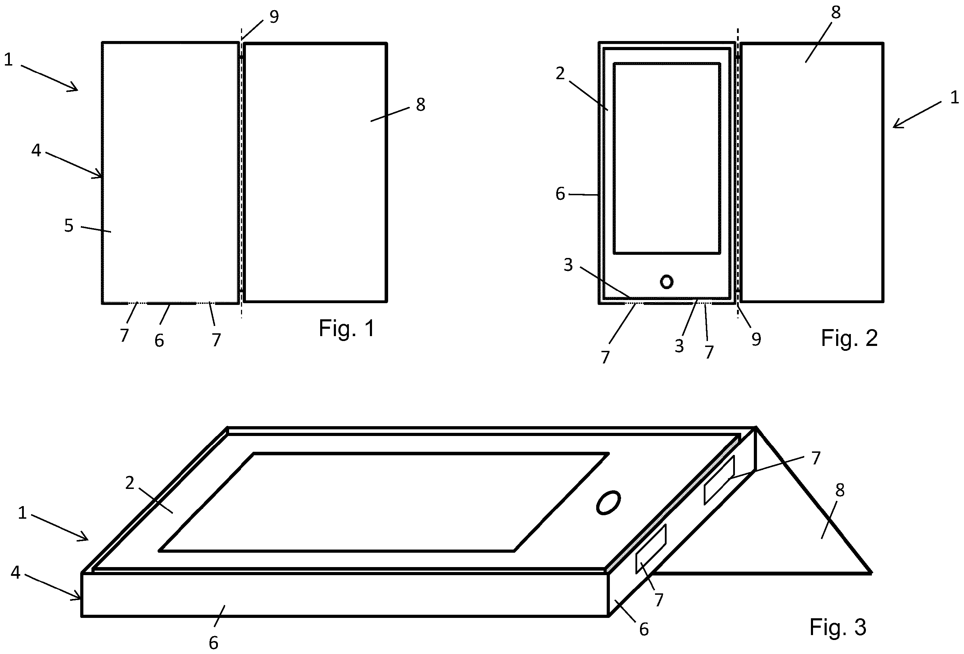

Fig. 1 zeigt eine Draufsicht auf eine Schutzhülle für ein Mobiltelefon 2. Diese besteht im Wesentlichen aus einer Schutzschale 4 in die das Mobiltelefon 2 eingesetzt werden kann, sowie einem ersten plattenförmigen Bauteil 8, welches als Deckel 8 ausgeführt ist und um eine erste Schwenkachse 9 an der Schutzschale 4 angelenkt ist. Die Schutzschale 4 weist eine Rückwand 5 sowie an jeder der Kanten je eine Seitenwand 6 auf. Die untere Seitenwand 6 weist darüber hinaus zwei Lautsprecheröffnungen 7 auf.

Das Mobiltelefon 2 kann, wie in Fig. 2 gezeigt, derart in die Schutzschale 4 eingesetzt werden, dass die Rückseite des Mobiltelefons 2 an der Rückwand 5 der Schutzschale 4 anliegt und die Seitenwände 6 an den jeweiligen Seitenkanten des Mobiltelefons 2 anliegen. Die Seitenwände 6 können einen schmalen Kragen aufweisen, der in das Innere der Schutzschale 4 hineinragt um das eingesetzte Mobiltelefon 2 in der Schutzschale 4 zu fixieren. Das Mobiltelefon 2 besitzt an der unteren Kante zwei Lautsprecher 3. Die Lautsprecheröffnungen 7 der Schutzschale 4 sind derart an der Position der Lautsprecher 3 angeordnet, dass die Lautsprecher 3 nicht von der Seitenwand 6 der Schutzschale 4 abgedeckt werden. Der Deckel 8 kann zum Schutz des Bildschirms des Mobiltelefons 2 vor die Schutzschale geklappt werden, sodass der Deckel 8 auf dem Bildschirm des Mobiltelefons 2 aufliegt.

Fig. 3 zeigt eine Schutzhülle mit Mobiltelefon 2 in einem aufgestellten Zustand. Dabei dient der Deckel 8 als Stützvorrichtung für die Schutzschale 4 und das darin eingesetzte Mobiltelefon 2. Werden auf dem Mobiltelefon 2 beispielsweise Videos oder Musik abgespielt, so können die Schallwellen, welche von den Lautsprechern 3 erzeugt werden, durch die Lautsprecheröffnungen 7 der Schutzschale 4 ausdringen.

Schutzhüllen für Mobiltelefone, wie die in Fig. 1 bis 3 gezeigten, sind in vielfältigen Variationen aus dem Stand der Technik bekannt.

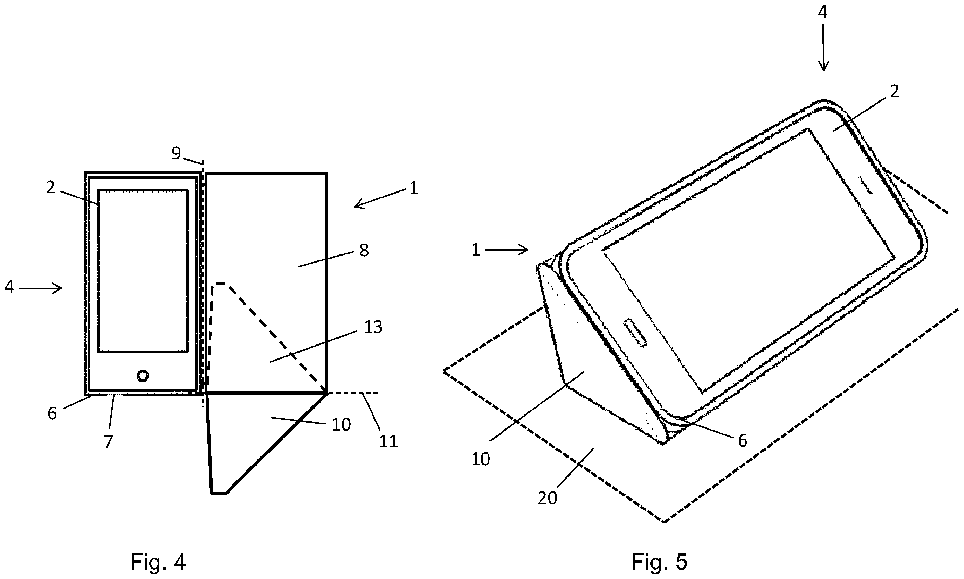

Fig. 4 zeigt ein erfindungsgemäßes Lautsprechersystem mit einem Mobiltelefon 2 und einer erfindungsgemäßen Lautsprecherhülle 1 in einem flachen Zustand. Das System weist ein zweites plattenförmiges Bauteil 10 auf, welches nachfolgend beispielhaft als Soundblende 10 bezeichnet wird und an der unteren Kante des Deckels 8 an einer zweiten Schwenkachse 11 angelenkt ist. Schutzschale 4, Deckel 8 und Soundblende 10 sind vollständig aufgeklappt und liegen in einer Ebene. In dem Deckel 8 ist eine Aussparung 13 vorgesehen, die in ihrer Form der Form der Soundblende 10 entspricht. Es ist damit möglich die Soundblende 10 auf den Deckel 8 zu klappen, derart, dass dieser im Deckel 8 versenkt wird. Der Deckel 8 kann daraufhin mit der eingeklappten Soundblende 10 entlang der Schwenkachse 9 auf das Mobiltelefon 2 geklappt werden. In diesem flachen Zustand sind das Mobiltelefon 2, die Rückwand 5 der Schutzschale 4, der Deckel 8 und die Soundblende 10 im Wesentlichen parallel zueinander.

Die Schutzschale 4 der Ausführungsform besitzt außerdem lediglich eine einzige Lautsprecheröffnung 7. Viele Mobiltelefone 2 weisen aus Designgründen an Ihrer Unterkante eine Lautsprecherattrappe und nur einen funktionstüchtigen Lautsprecher 3 auf. Es muss somit in der Schutzschale 4 nur eine einzige Lautsprecheröffnung 7 vorgesehen sein.

Fig. 5 zeigt ein erfindungsgemäßes Lautsprechersystem in einem aufgerichteten Zustand. Schutzschale 4, Deckel 8 und Soundblende 10 liegen dabei mit jeweils einer ihrer Seitenkanten in der Ebene 20. Die Soundblende 10 ist im Wesentlichen dreieckig gestaltet, wobei zwei Ecken abgeflacht sind, um bündig mit der Schutzschale 4 abzuschließen. Die Soundblende 10 weist eine Unterkante, eine Hinterkante und eine Vorderkante auf. Die Soundblende 10 ist an der Hinterkante am Deckel 8 befestigt, steht mit der Unterkante auf dem in der Ebene 20 liegenden Untergrund und liegt an der Vorderkante an der Seitenwand 6 der Schutzschale 4 an. Dadurch wird im aufgerichteten Zustand durch Deckel 8, Soundblende 10, Schutzschale 4 und den Untergrund ein Volumen gebildet, welches nur an einer Teilfläche geöffnet ist. Die geöffnete Teilfläche dieses Volumens liegt an der der Soundblende 10 gegenüberliegenden Seite.

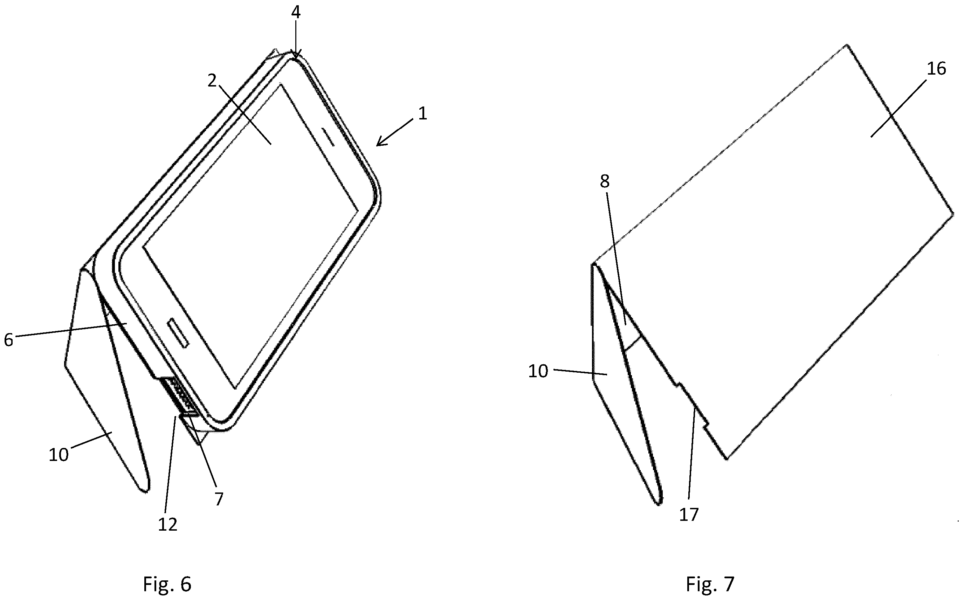

Um als Klang- und Resonanzvolumen für den Lautsprecher 3 des Mobiltelefons 2 wirken zu können, müssen die Schallwellen, die von dem Lautsprecher 3 ausgehen, in das durch Deckel 8, Soundblende 10 und Schutzschale 4 gebildete Volumen geleitet werden. Fig. 6 zeigt eine erfindungsgemäße Ausführungsform bei der die erfindungsgemäße Soundblende 10 zur Veranschaulichung leicht geöffnet ist. Die Schutzschale 4 weist in der Seitenwand 6 für die Lautsprecheröffnung 7 einen Schallkanal 12 auf. Dieser ist als Aussparung in der Seitenwand 6 ausgeführt und verläuft von der Lautsprecheröffnung 7 zur Rückwand 5 der Schutzschale 4, insbesondere bis auf die Rückseite der Rückwand 5 in das Klang- und Resonanzvolumen. Der Schallkanal 12 verläuft über die gesamt Breite der Lautsprecheröffnung 7. Lautsprecheröffnung 7 und Schallkanal 12 sind daher als eine gemeinsame Aussparung in der Seitenwand 6 der Schutzschale 4 ausgebildet, die im aufgestellten Zustand durch die Soundblende 10 abgedeckt sind. Die Schallwellen werden daher in einem geschlossenen Kanal von dem Lautsprecher 3 des Mobiltelefons 2 bis in das Klang- und Resonanzvolumen geleitet. Im flachen Zustand sind Lautsprecheröffnung 7 und Schallkanal 12 nach außen offen, sodass der Lautsprecher 3 in diesem Fall seine normale Abstrahlcharakteristik aufweist. Wenn das Mobiltelefon 2 typischerweise auf der Rückseite oder der Vorderseite liegt, können die Schallwellen daher ungehindert abgegeben werden. So wird beispielsweise das Klingeln des Mobiltelefons 2 nicht gedämpft. Eine Umleitung der Schallwellen besteht daher nur im aufgerichteten Zustand während im flachen Zustand keine Umlenkung der Schallwellen stattfindet.

Das durch Rückwand 5, Deckel 8, Soundblende 10 sowie die Unterlage gebildete Volumen kann daher als Klang- und Resonanzvolumen für den Lautsprecher 3 des Mobiltelefons 2 dienen und somit zu einer deutlichen Verbesserung der Klangeigenschaften führen. Der Aufstellwinkel des Mobiltelefons 2 ist vorgegeben durch den Winkel der Soundblende 10 zwischen Vorderkante und Unterkante und kann ein beliebiger spitzer Winkel sein und damit je nach Bedarf eine Stützvorrichtung für sehr flache bis sehr steile Aufstellwinkel des Mobiltelefons 2 schaffen.

Die Rückwand 5 der Schutzschale 4 weist außerdem eine Abdeckung 16 auf, die einstückig mit dem Deckel 8 verbunden ist. Die Abdeckung 16 ist in der in Fig. 7 gezeigten Darstellung ohne Schutzschale 4 zu sehen. Die Abdeckung 16 weist eine Aussparung 17 auf, die den Schallkanal 12 mit dem Klang und Resonanzvolumen verbindet. Die Abdeckung 16 bildet mit dem Deckel 8 ein Booklet-Case für ein Mobiltelefon.

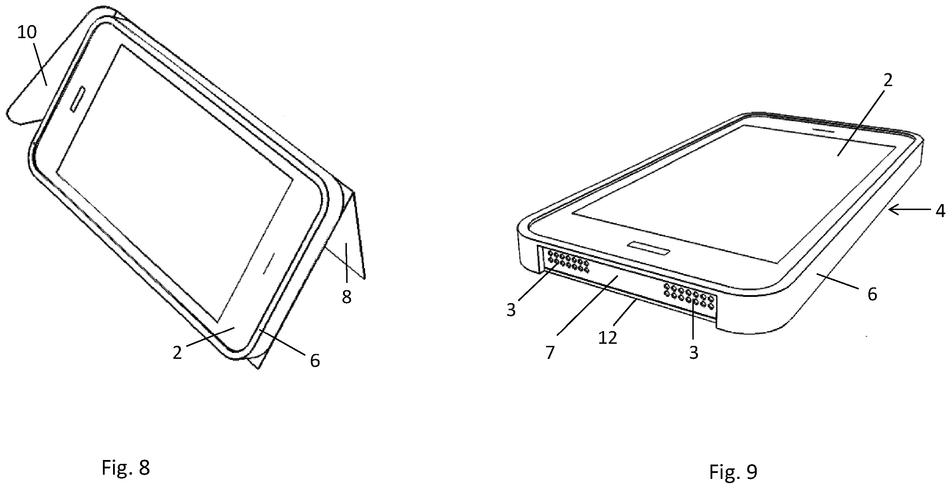

Fig. 8 zeigt eine Darstellung der Erfindung mit Blick auf die geöffnete Seite des Resonanzvolumens. Bei geschlossener Soundblende 10 bildet diese Öffnung die einzige Öffnung des Klang- und Resonanzvolumens, durch die daher der Schall an die Umgebung abgestrahlt wird.

Fig. 9 zeigt die Schutzschale 4 einer Ausführungsform mit zwei Lautsprechern 3, wobei eine einzige Lautsprecheröffnung 7 sich über beide Lautsprecher 3 erstreckt. Der Schallkanal 12 verläuft über die volle Breite dieser Lautsprecheröffnung 7. Alternativ könnte die eine gemeinsame Lautsprecheröffnung 7 mit je einem separaten Schallkanal 12 für jeden der Lautsprecher 3 ausgestattet sein.

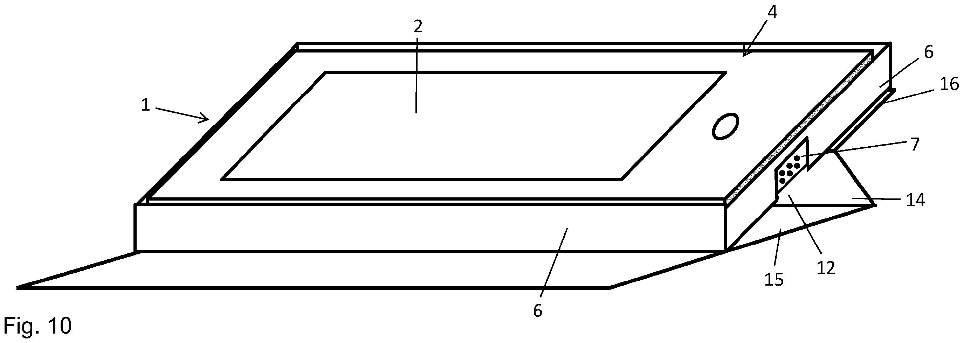

Der Deckel 8 ist in einer Ausführungsform aus mehreren Segmenten 14, 15 aufgebaut, welche derart miteinander verbunden sind, dass sie an den Verbindungsstellen faltbar sind. Eine faltbare Verbindung wird typischerweise durch dünnes, biegsames Material zwischen den Segmenten 14, 15 realisiert. Eine Ausführungsform mit einem solchen Deckel 8 ist in Fig. 10 dargestellt. Durch Umklappen der Segmente 14, 15 lässt sich aus dem Deckel 8 eine Stützvorrichtung für das Mobiltelefon 2 herstellen. Mit dieser kann das Mobiltelefon 2 angewinkelt aufgestellt werden, wie in der perspektivischen Ansicht in Fig. 10 zu sehen ist. Das erste Segment 14 des Deckels 8 ist dabei etwa mittig an der Schutzschale 4 angelenkt. In dem dargestellten aufgerichteten Zustand liegt das zweite Segment des Deckels 8 flach auf dem Untergrund auf. Die Soundblende 10 ist in der Fig. 10 nicht dargestellt, liegt aber bei dieser Ausführungsform mit ihrer Unterkante am zweiten Segment 15 des Deckels 8, mit ihrer Hinterkante am ersten Segment 14 des Deckels 8 und mit ihrer Vorderkante an der Seitenwand 6 der Schutzschale 4 an. Es wird somit durch die Schutzschale 4, insbesondere die Rückwand 5 der Schutzschale 4, das erste und das zweite Segment 14, 15 und die Soundblende 10 ein Klang- und Resonanzvolumen gebildet. Diese Ausführungsform benötigt daher keinen flachen Untergrund um ein Klang- und Resonanzvolumen zu schaffen, sondern kann beispielsweise auch in der Hand gehalten werden.

Auch in dieser Ausführungsform weist die Rückwand 5 der Schutzschale 4 eine Abdeckung 16 auf, welche einstückig mit dem Deckel 8 verbunden ist. Die Abdeckung 16 verläuft nur über einen Teilbereich der Rückwand 5, wobei in einem flach liegenden Zustand das erste Segment 14 an dem übrigen Teilbereich der Rückwand 5 der Schutzschale 4 anliegt. Da das erste Segment jedoch in einem aufgerichteten Zustand von der Rückwand 5 weggeklappt ist, muss dieses keine Aussparung aufweisen.

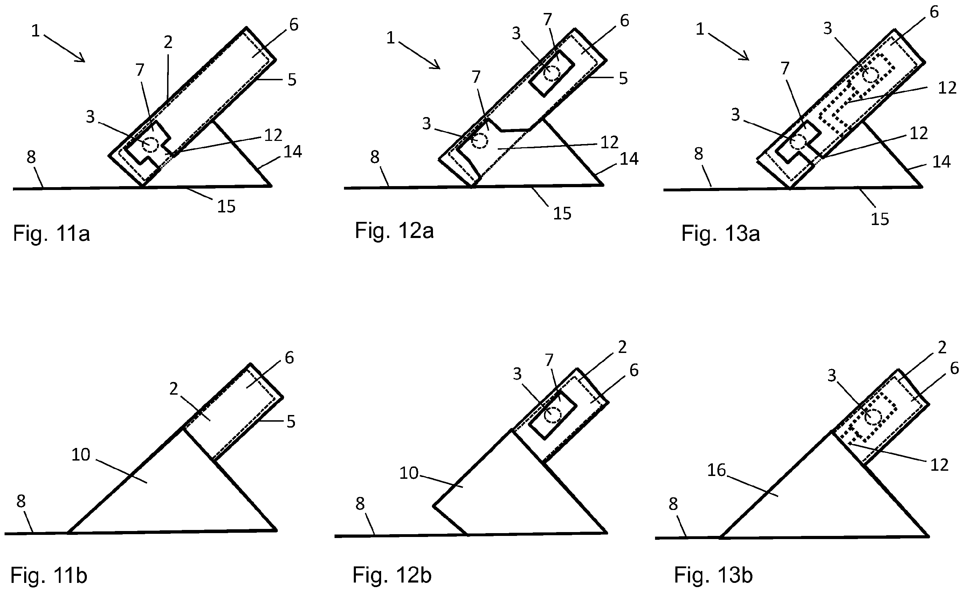

Fig. 11a zeigt eine Seitenansicht einer alternativen Ausführungsform, wobei das mobile Gerät 2 mit den Lautsprechern 3 mit gestrichelten Linien angedeutet ist. Der Schallkanal 12 der Lautsprecheröffnung 7 weist eine geringere Breite als die Lautsprecheröffnung 7 auf und verläuft von der Lautsprecheröffnung 7 bis zu der Rückwand 5 der Schutzschale 4 in das Innere des Klang- und Resonanzvolumens. In Fig. 11b ist die Ausführungsform der Fig. 11a mit Soundblende 10 dargestellt. Die Soundblende 10 hat eine dreieckige Form und ist an dem zweiten Segment 15 des Deckels 8 angelenkt. Sie liegt derart an der Seitenwand 6 der Schutzschale 4 an, dass die Lautsprecheröffnung 7 und der Schallkanal 12 abgedeckt werden und somit einen geschlossenen Kanal in das Innere des Volumens bilden.

Eine weitere Ausführungsform ist in Fig. 12a in einer Seitenansicht dargestellt. Der Schallkanal 12 weist die volle Breite der Lautsprecheröffnung 7 auf und erweitert sich ausgehend von der Lautsprecheröffnung 7 in Richtung zur Rückwand 5 und verläuft von dem Lautsprecher 3 des Mobiltelefons 2 bis zu Rückwand 5 der Schutzschale in das Innere des Klang- und Resonanzvolumens. In Fig. 12b ist die Ausführungsform der Fig. 12a mit Soundblende 10 dargestellt. Die Soundblende 10 hat eine im Wesentlichen dreieckige Form, wobei eine Ecke abgeflacht ist um bündig mit der Schutzschale 4 abzuschließen. Sie liegt derart an der Seitenwand 6 der Schutzschale 4 an, dass die Lautsprecheröffnung 7 und der Schallkanal 12 abgedeckt werden und somit einen geschlossenen Schallkanal in das Innere des Volumens bilden. Die Ausführungsform weist darüber hinaus eine zweite Lautsprecheröffnung 7 über einem zweiten Lautsprecher 3 auf. Diese Lautsprecheröffnung 7 weist keinen Schallkanal in das Innere des Volumens auf und wird nicht durch die Soundblende 10 abgedeckt. Durch die Kombination von Lautsprechern 3 innerhalb und außerhalb des Volumens lässt sich der Klang des Lautsprechersystems beeinflussen.

Eine weitere Ausführungsform ist in Fig. 13a in einer Seitenansicht dargestellt. Der Schallkanal 12 der Lautsprecheröffnung 7 weist eine geringere Breite als die Lautsprecheröffnung 7 auf und verläuft von der Lautsprecheröffnung 7 bis zu Rückwand 5 der Schutzschale 4 in das Innere des Klang- und Resonanzvolumens. Das Mobiltelefon 2 weist darüber hinaus einen zweiten Lautsprecher 3 auf. Über diesem zweiten Lautsprecher 3 ist keine Lautsprecheröffnung 7 angeordnet. Stattdessen weist die Seitenwand 6 der Schutzschale 4 einen Schallkanal 12 auf, der vollständig innerhalb der Seitenwand 6 verläuft. Der Schallkanal beginnt über dem Lautsprecher 3 des Mobiltelefons und endet an der Rückwand 5 der Schutzschale, sodass ein geschlossener Schallkanal vom Lautsprecher bis in das Innere des Volumens besteht. In Fig. 13b ist die Ausführungsform der Fig. 13a mit Soundblende 10 dargestellt. Der durch den zweiten Lautsprecher 3 erzeugte Schall kann daher in das Innere des Klang- und Resonanzvolumens geleitet werden, ohne dass die Soundblende den Bereich über dem Lautsprecher abdecken muss.

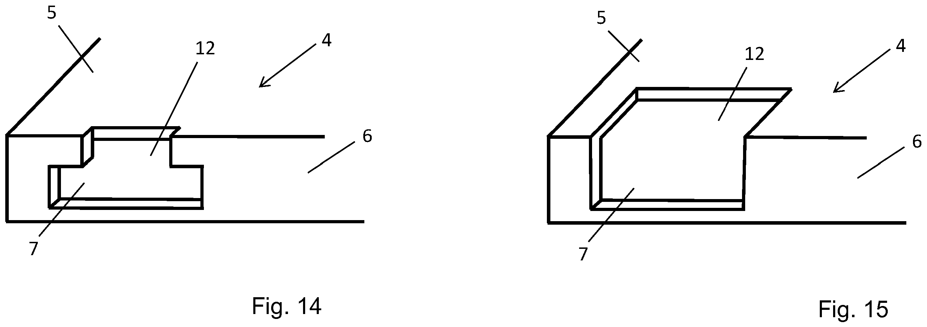

Fig. 14 und 15 zeigen je eine perspektivische Ansicht auf einen Ausschnitt einer Rückseite einer erfindungsgemäßen Schutzschale 4 mit der Rückwand 5 und einer Seitenwand 6. In Fig. 14 ist eine Lautsprecheröffnung 7 in der Seitenwand 6 gezeigt, die mit einem schmaleren Schallkanal 12 von der Lautsprecheröffnung 7 zur Rückwand 5 mit der Rückseite der Schutzschale 4 verbunden ist.

Fig. 15 zeigt den gleichen Ausschnitt einer Ausführungsform mit einem Schallkanal 12 der sich über die volle Breite der Lautsprecheröffnung 7 erstreckt. Der Schallkanal 12 beginnt an der Lautsprecheröffnung 7 in der Seitenwand 6 und setzt sich in der Rückwand 5 fort.

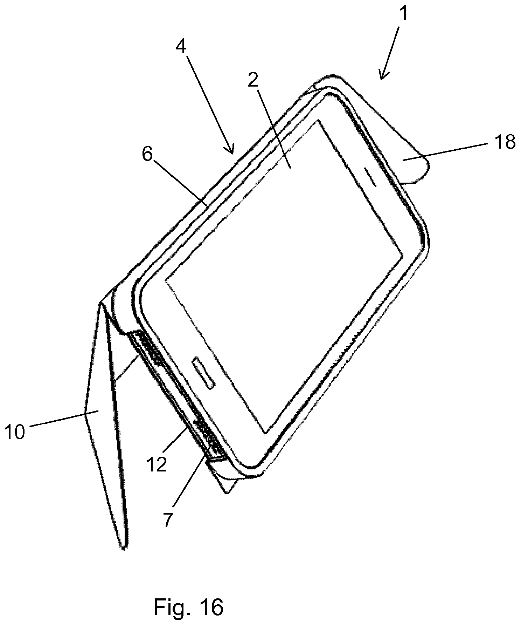

Fig. 16 zeigt eine Ausführungsform mit einer zweiten Soundblende 18. Diese ist auf der der ersten Soundblende 10 gegenüberliegenden Seite des Deckels 8 angelenkt. Durch Öffnen und Schließen der einzelnen Soundblenden 10, 18 kann so das Klangverhalten angepasst werden. Diese Ausführungsform ist besonders geeignet für mobile Geräte 2 bei denen an zwei gegenüberliegenden Seitenkanten Lautsprecher 3 angeordnet sind.

Durch den Aufbau aus plattenförmigen Bauteilen kann das erfindungsgemäße Lautsprechersystem zusammengefaltet und somit für den Transport platzsparend verstaut werden. Gleichzeitig bildet es in einem aufgestellten Zustand ein Resonanzvolumen, welches für eine gute Klangqualität sorgt.

### Bezugszeichenliste

- 1: Lautsprecherhülle
- 2: Mobiltelefon
- 3: Lautsprecher
- 4: Schutzschale
- 5: Rückwand
- 6: Seitenwand
- 7: Lautsprecheröffnung
- 8: Deckel
- 9: erste Schwenkachse
- 10: Soundblende
- 11: zweite Schwenkachse
- 12: Schallkanal
- 13: Aussparung für Soundblende
- 14: erstes Segment
- 15: zweites Segment
- 16: Abdeckung
- 17: Aussparung
- 18: zweite Soundblende
- 20: Ebene

## Patentansprüche

1. Lautsprecherhülle für ein mobiles Gerät (2) mit einem Lautsprecher (3), aufweisend
eine Schutzschale (4) in die das mobile Gerät (2) einsetzbar ist, wobei die Schutzschale (4) eine Rückwand (5) und mindestens eine Seitenwand (6) mit einer Lautsprecheröffnung (7) aufweist,
ein plattenförmiges Bauteil (8), welches um eine erste Schwenkachse (9) schwenkbar an der Schutzschale (4) befestigt ist, wobei die Lautsprecherhülle (1) wenigstens ein zweites plattenförmiges Bauteil (10) aufweist, welches um eine zweite Schwenkachse (11) schwenkbar an dem ersten plattenförmigen Bauteil (8) befestigt ist, wobei die Schwenkachsen (9, 11) zueinander rechtwinklig sind und
wobei die Schutzschale (4) einen Schallkanal (12) von der Lautsprecheröffnung (7) zur Rückwand (5) der Schutzschale (4) aufweist.

2. Lautsprecherhülle nach Anspruch 1, wobei die Rückwand (5) der Schutzschale (4), das erste plattenförmige Bauteil (8) und das zweite plattenförmige Bauteil (10) aus einem flach liegenden Zustand, in dem das erste und zweite plattenförmige Bauteil (8, 10) sowie die Rückwand (5) der Schutzschale (4) im Wesentlichen parallel zueinander ausgerichtet sind, in einen aufgerichteten Zustand überführbar sind, in dem das erste und zweite plattenförmige Bauteil (8, 10) sowie die Rückwand (5) der Schutzschale (4) jeweils zueinander einen spitzen, rechten oder stumpfen Winkel bilden.

3. Lautsprecherhülle nach Anspruch 2, wobei die Formen der beiden plattenförmigen Bauteile (8, 10) und die Anordnung der Schwenkachsen (9, 11) so gewählt sind, dass im aufgerichteten Zustand das erste und das zweite plattenförmige Bauteil (8, 10) als Stützvorrichtung für die Schutzschale (4) dient.

4. Lautsprecherhülle nach Anspruch 2 oder 3, wobei die Formen der plattenförmigen Bauteile (8, 10) und die Anordnung der Schwenkachsen (9, 11) so gewählt sind, dass die Schutzschale (4), insbesondere die Rückwand (5), sowie das erste und zweite plattenförmige Bauteil (8, 10) im aufgerichteten Zustand jeweils mit einer ihrer Seitenkanten in einer Ebene (20) liegen, wobei die plattenförmigen Bauteile (8, 10) und die Schutzschale (4) zusammen mit der Ebene (20) ein Volumen definieren, welches an der, dem zweiten Bauteil (10) gegenüberliegenden Seite geöffnet ist, wobei der Schallkanal (12) in das Innere des Volumens gerichtet ist.

5. Lautsprecherhülle nach einem der vorhergehenden Ansprüche, wobei das erste plattenförmige Bauteil (8) mehrere Segmente (14, 15) aufweist, die gelenkig miteinander verbunden sind.

6. Lautsprecherhülle nach Anspruch 5, wobei die Formen der plattenförmigen Bauteile (8, 10) und die Anordnung der Schwenkachsen (9, 11) so gewählt sind, dass im aufgerichteten Zustand die Schutzschale (4), insbesondere die Rückwand (5), sowie die Segmente (14, 15) des ersten plattenförmigen Bauteils (8) und das zweite plattenförmige Bauteil (10) ein Volumen definieren, welches an der, dem zweiten Bauteil (10) gegenüberliegenden Seite geöffnet ist, wobei der Schallkanal (12) in das Innere des Volumens gerichtet ist.

7. Lautsprecherhülle nach einem der vorhergehenden Ansprüche, wobei die Rückwand (5) der Schutzschale (4) eine Abdeckung (16) aufweist, welche insbesondere einstückig mit dem ersten plattenförmigen Bauteil (8) verbunden ist, wobei die Abdeckung (16) an der Position des Schallkanals (12) eine Aussparung (17) aufweist.

8. Lautsprecherhülle nach einem der Ansprüche 2 bis 7, wobei das zweite plattenförmige Bauteil (10) im aufgerichteten Zustand an der Seitenwand (6) der Schutzschale (4) anliegt.

9. Lautsprecherhülle nach Anspruch 8, wobei das zweite plattenförmige Bauteil (10) im aufgerichteten Zustand die Lautsprecheröffnung (7) der Schutzschale (4) abdeckt.

10. Lautsprecherhülle nach einem der vorhergehenden Ansprüche, wobei der Schallkanal (12) als durchgehende oder einseitige Aussparung der Schutzschale (4) gebildet ist oder vollständig innerhalb der Schutzschale (4) verläuft.

11. Lautsprecherhülle nach einem der vorhergehenden Ansprüche, wobei der Schallkanal in der Seitenwand und/oder der Rückwand der Schutzschale verläuft.

12. Lautsprecherhülle nach einem der vorhergehenden Ansprüche, wobei sich der Schallkanal (12) über die volle Breite der Lautsprecheröffnung (7) erstreckt und/oder dass sich der Schallkanal (12) ausgehend von der Lautsprecheröffnung (7) erweitert.

13. Lautsprecherhülle nach einem der vorhergehenden Ansprüche, wobei an dem ersten plattenförmigen Bauteil ein drittes plattenförmiges Bauteil, insbesondere an der dem zweiten plattenförmigen Bauteil gegenüberliegenden Seite des ersten plattenförmigen Bauteils, angelenkt ist.

14. Lautsprechersystem mit einem mobilen Gerät (2) welches einen Lautsprecher (3) aufweist, sowie einer Lautsprecherhülle (1) gemäß einem der vorherigen Ansprüche, wobei das mobile Gerät (2) in die Schutzschale (4) der Lautsprecherhülle (1) eingesetzt ist und die Lautsprecheröffnung (7) der Schutzschale (4) an der Position des Lautsprechers (3) des mobilen Geräts (2) angeordnet ist.

15. Lautsprechersystem nach Anspruch 14, wobei das erste plattenförmige Bauteil (8) oder ein Segment (14, 15) des ersten plattenförmigen Bauteils (8) im flachen Zustand auf einer Anzeigeeinrichtung des mobilen Geräts (2) aufliegt.

## Claims

1. A loudspeaker cover for a mobile device (2) comprising a loudspeaker (3), having a protective shell (4) into which the mobile device (2) can be inserted, wherein the protective shall (4) has a rear wall (5) and at least one side wall (6) with a loudspeaker opening (7), a plate-shaped component (8), which is fastened to the protective shell (4) so that it can pivot about a first pivot axis (9), wherein the loudspeaker cover (1) has at least a second plate-shaped component (10), which is fastened to the first plate-shaped component (8) so that it can pivot about a second pivot axis (11), wherein the pivot axes (9, 11) are at right angles to each other and wherein the protective shall (4) has an acoustic channel (12) from the loudspeaker opening (7) to the rear wall (5) of the protective shell (4).

2. The loudspeaker cover according to Claim 1, wherein the rear wall (5) of the protective shell (4), the first plate-shaped component (8) and the second plate-shaped component (10) can be moved from a flat-lying state, in which the first and second plate-shaped components (8, 10) and also the rear wall (5) of the protective shell (4) are oriented essentially parallel to one another, into an erected state, in which the first and second plate-shaped components (8, 10) and also the rear wall (5) of the protective shell (4) each form an acute, right or obtuse angle relative to one another.

3. The loudspeaker cover according to Claim 2, wherein the shapes of the two plate-shaped components (8, 10) and the arrangement of the pivot axes (9, 11) are selected such that the first and second plate-shaped components (8, 10) serve as a support means for the protective shell (4) in the erected state.

4. The loudspeaker cover according to Claim 2 or 3, wherein the shapes of the plate-shaped components (8, 10) and the arrangement of the pivot axes (9, 11) are selected such that in the erected state, one of the side edges of the protective shell (4), in particular of the rear wall (5), and also of the first and second plate-shaped components (8, 10) in each case lies in a plane (20), wherein the plate-shaped components (8, 10) and the protective shell (4) define a volume jointly with the plane (20), which volume is open on the side opposite the second component (10), wherein the acoustic channel (12) is directed into the interior of the volume.

5. The loudspeaker cover according to any one of the preceding claims, wherein the first plate-shaped component (8) has multiple segments (14, 15), which are hingedly interconnected.

6. The loudspeaker cover according to Claim 5, wherein the shapes of the plate-shaped components (8, 10) and the arrangement of the pivot axes (9, 11) are selected such that, in the erected state, the protective shell (4), in particular the rear wall (5), and also the segments (14, 15) of the first plate-shaped component (8) and the second plate-shaped component (10) define a volume, which is open on the side opposite the second component (10), wherein the acoustic channel (12) is directed into the interior of the volume.

7. The loudspeaker cover according to any one of the preceding claims, wherein the rear wall (5) of the protective shell (4) has a cover plate (16), which is in particular integrally connected to the first plate-shaped component (8), wherein the cover plate (16) has a recess (17) at the position of the acoustic channel (12) .

8. The loudspeaker cover according to any one of the Claims 2 to 7, wherein the second plate-shaped component (10) rests on the side wall (6) of the protective shell (4) in the erected state.

9. The loudspeaker cover according to Claim 8, wherein the second plate-shaped component (10) covers the loudspeaker opening (7) of the protective shell (4) in the erected state.

10. The loudspeaker cover according to any one of the preceding claims, wherein the acoustic channel (12) is formed as a continuous or one-sided recess of the protective shell (4) or runs entirely within the protective shell (4).

11. The loudspeaker cover according to any one of the preceding claims, wherein the acoustic channel runs in the side wall and/or in the rear wall of the protective shell.

12. The loudspeaker cover according to any one of the preceding claims, wherein the acoustic channel (12) extends over the entire width of the loudspeaker opening (7) and/or the acoustic channel (12) widens out from the loudspeaker opening (7).

13. The loudspeaker cover according to any one of the preceding claims, wherein a third plate-shaped component is hinged to the first plate-shaped component, in particular on the side of the first plate-shaped component which is opposite the second plate-shaped component.

14. A loudspeaker system comprising a mobile device (2), which has a loudspeaker (3), and also comprising a loudspeaker cover (1) according to any one of the preceding claims, wherein the mobile device (2) is inserted in the protective shell (4) of the loudspeaker cover (1) and the loudspeaker opening (7) of the protective shell (4) is arranged at the position of the loudspeaker (3) of the mobile device (2).

15. The loudspeaker system according to Claim 14, wherein the first plate-shaped component (8) or a segment (14, 15) of the first plate-shaped component (8) rests on a display unit of the mobile device (2) in the flat-lying state.

## Revendications

1. Gaine de haut-parleur destinée à un appareil mobile (2) doté d'un haut-parleur (3), comportant
une coque protectrice (4) dans laquelle l'appareil mobile (2) est insérable, la coque protectrice (4) comportant une paroi arrière (5) et au moins une paroi latérale (6) pourvue d'un orifice pour haut-parleur (7),
un composant (8) en forme de plaque, lequel est fixé sur la coque protectrice (4) en étant susceptible de pivoter autour d'un premier axe de pivotement (9),
la gaine de haut-parleur (1) comportant au moins un deuxième composant (10) en forme de plaque, lequel en étant susceptible de pivoter autour d'un deuxième axe de pivotement (11) est fixé sur le premier composant (8) en forme de plaque, les axes de pivotement (9, 11) étant perpendiculaires l'un par rapport à l'autre
la coque protectrice (4) comportant un canal acoustique (12) allant de l'orifice pour haut-parleur (7) vers la paroi arrière (5) de la coque protectrice (4) .

2. Gaine de haut-parleur selon la revendication 1, la paroi arrière (5) de la coque protectrice (4), le premier composant (8) en forme de plaque et le deuxième composant (10) en forme de plaque étant susceptibles d'être passés d'un état de repos à plat, dans lequel le premier et le deuxième composants (8, 10) en forme de plaques et la paroi arrière (5) de la coque protectrice (4) sont orientés sensiblement à la parallèle les uns des autres dans un état érigé, dans lequel le premier et le deuxième composants (8, 10) en forme de plaques et la paroi arrière (5) de la coque protectrice (4) forment respectivement les uns par rapport aux autres un angle aigu, droit ou obtus.

3. Gaine de haut-parleur selon la revendication 2,
les formes de deux composants (8, 10) en forme de plaques et le placement des axes de pivotement (9, 11) étant sélectionnés de telle sorte qu'à l'état érigé, le premier et le deuxième composants, (8, 10) en forme de plaques servent de dispositif de soutien pour la coque protectrice (4).

4. Gaine de haut-parleur selon la revendication 2 ou 3,
les formes des composants (8, 10) en forme de plaques et le placement des axes de pivotement (9, 11) étant sélectionnés de telle sorte qu'à l'état érigé, la coque protectrice (4), notamment la paroi arrière (5), ainsi que le premier et le deuxième composants (8, 10) en forme de plaque se situent dans un plan (20) avec leurs arêtes latérales, les composants (8, 10) en forme de plaques et la coque protectrice (4) définissant avec la plan (20) un volume qui est ouvert sur le côté opposé au deuxième composant (10), le canal acoustique (12) étant dirigé vers l'intérieur du volume.

5. Gaine de haut-parleur selon l'une quelconque des revendications précédentes, le premier composant (8) en forme de plaque comportant plusieurs segments (14, 15) qui sont reliés les uns aux autres de manière articulée.

6. Gaine de haut-parleur selon la revendication 5,
les formes des composants (8, 10) en forme de plaques et le placement des axes de pivotement (9, 11) étant sélectionnés de telle sorte qu'à l'état érigé, la coque protectrice (4), notamment la paroi arrière (5), ainsi que les segments (14, 15) du premier composant (8) en forme de plaque et le deuxième composant (10) en forme de plaque définissent un volume, lequel est ouvert sur le côté opposé au deuxième composant (10), le canal acoustique (12) étant dirigé vers l'intérieur du volume.

7. Gaine de haut-parleur selon l'une quelconque des revendications précédentes,
la paroi arrière (5) de la coque protectrice (4) comportant un recouvrement (16) lequel est relié notamment d'un seul tenant avec le premier composant (8) en forme de plaque, à la position du canal acoustique (12), le recouvrement (16) comportant une encoche (17).

8. Gaine de haut-parleur selon l'une quelconque des revendications 2 à 7,
à l'état érigé, le deuxième composant (10) en forme de plaque étant adjacent à la paroi latérale (6) de la coque protectrice (4).

9. Gaine de haut-parleur selon la revendication 8, à l'état érigé, le deuxième composant (10) en forme de plaque recouvrant l'orifice pour haut-parleur (7) de la coque protectrice (4).

10. Gaine de haut-parleur selon l'une quelconque des revendications précédentes,
le canal acoustique (12) étant créé sous la forme d'une encoche traversante ou unilatérale de la coque protectrice (4) ou s'écoulant totalement à l'intérieur de la coque protectrice (4).

11. Gaine de haut-parleur selon l'une quelconque des revendications précédentes,
le canal acoustique s'écoulant dans la paroi latérale et/ou dans la paroi arrière de la coque protectrice.

12. Gaine de haut-parleur selon l'une quelconque des revendications précédentes,
le canal acoustique (12) s'étendant sur la largeur totale de l'orifice pour haut-parleur (7) et/ou le canal acoustique (12) s'élargissant à partir de l'orifice pour haut-parleur (7).

13. Gaine de haut-parleur selon l'une quelconque des revendications précédentes, sur le premier composant en forme de plaque étant articulé un troisième composant en forme de plaque, notamment sur le côté opposé au deuxième composant en forme de plaque du premier composant en forme de plaque.

14. Système de haut-parleur avec un appareil mobile (2) lequel comporte un haut-parleur (3) ainsi qu'une gaine de haut-parleur (1) selon l'une quelconque des revendications précédentes, l'appareil mobile (2) étant inséré dans la coque protectrice (4) de la gaine de haut-parleur (1) et l'orifice pour haut-parleur (7) de la coque protectrice (4) étant placé à la position du haut-parleur (3) de l'appareil mobile (2).

15. Système de haut-parleur selon la revendication 14,
à l'état plat, le premier composant (8) en forme de plaque ou un segment (14, 15) du premier composant (8) en forme de plaque reposant sur un système d'affichage de l'appareil mobile (2).
